# EUROPÄISCHE PATENTSCHRIFT

(11) **EP 1 908 174 B1**
(45) Veröffentlichungstag und Bekanntmachung des Hinweises auf die Patenterteilung: **06.04.2011**
(21) Anmeldenummer: 06776227.8
(22) Anmeldetag: 13.07.2006
(51) Int. Cl.: H04B 1/16

(54) **MEHRKANALIGER HOCHFREQUENZ-EMPFÄNGER**
MULTI-CHANNEL RADIOFREQUENCY RECEIVER
RECEPTEUR HAUTE FREQUENCE MULTIVOIE

(30) Priorität: 21.07.2005 DE 102005034032
(43) Veröffentlichungstag der Anmeldung: 09.04.2008
(73) Patentinhaber: Selex Systems Integration GmbH, 41429 Neuss (DE)
(72) Erfinder: GEKAT, Frank, 51503 Rösrath (DE); RUHL, Dieter, 40597 Düsseldorf (DE)
(74) Vertreter: Sparing Röhl Henseler Patentanwälte European Patent Attorneys
(86) Internationale Anmeldenummer: PCT/EP2006/006865
(87) Internationale Veröffentlichungsnummer: WO 2007/009660

(56) Entgegenhaltungen:
- EP-A- 1 089 445
- WO-A-95/29567
- US-A- 5 111 202

## Beschreibung

Die Erfindung betrifft einen mehrkanaligen Hochfrequenz-Empfänger nach dem Oberbegriff des Anspruchs 1.

Bei Hochfrequenz-Empfängern für Radaranlagen, Kommunikationsgeräte, Meßgeräte usw. ist der Dynamikbereich durch die verwendeten elektronischen Komponenten, bei digitaler Verarbeitung insbesondere den verwendeten Analog/Digital-Wandlern, beschränkt.

Zur Erhöhung des Dynamikbereichs ist es aus der GB 2 204 200 A bekannt, ein empfangenes hochfrequentes Signal nach Umsetzen in eine Zwischenfrequenz und nachfolgendem Umsetzen in eine Basisfrequenz mit einer automatischen Verstärkungssteuerung (automatic gain control, AGC) durch variables Verstärken an den Dynamikbereich der verwendeten Komponenten anzupassen. Das variable Verstärken beeinträchtigt jedoch die Signalqualität. Um auf schnelle Änderungen der Signalstärke reagieren zu können, muß zudem das Nutzsignal gegenüber dem Stellsignal verzögert werden, da andernfalls die automatische Verstärkungssteuerung nicht steuern kann, bevor das Nutzsignal auf eine dynamikbegrenzende Baugruppe trifft. Dies ist nur mit hohem Aufwand erreichbar. Schließlich muß für eine Kalibrierung messender Radargeräte, insbesondere meteorologioscher Radargeräte, die Verstärkungseinstellung der AGC genau bekannt sein.

Als Alternative zur automatischen Verstärkungssteuerung wird in der EP 0 660 539 B1 vorgeschlagen, nach Umsetzen des hochfrequenten Signals in eine Zwischenfrequenz eine Signalteilung in drei Kanäle durchzuführen. Ein Kanal weist einen Verstärker auf und wird einem Eingang eines Multiplexers zugeführt, ein weiterer Kanal wird einem weiteren Eingang des Multiplexers unverändert zugeführt und der letzte Kanal weist einen Detektor für die Signalstärke auf und ist mit einem Steuereingang des Multiplexers verbunden, um abhängig von der Signalstärke entweder den verstärkten oder den unverstärkten Kanal zu einer gemeinsamen Auswerteschaltung für das Signal durchzuschalten. Allerdings ist hierbei ein zusätzlicher Kanal erforderlich, der nicht der Auswertung des Signals dient und zudem die Signalstärke auf den anderen beiden Kanälen verringert. Ferner verfälscht der Multiplexer das zur Auswerteschaltung weitergeleitete Signal insbesondere beim Umschalten, so daß der bekannte Empfänger nicht für Signale geeignet ist, bei denen sich schwache Amplituden häufig mit starken Amplituden abwechseln. Schließlich sind die Komponenten vor dem Signalteiler für den gesamten Dynamikbereich des Empfängers und damit kompromißbehaftet auszulegen.

Aus WO 95/29567 A ist ein Mehrkanal-Empfänger nach dem Oberbegriff des Anspruchs 1 bekannt.

Der Erfindung liegt daher die Aufgabe zugrunde, einen mehrkanaligen Hochfrequenz-Empfänger nach dem Oberbegriff des Anspruchs 1 zu schaffen, der bei vereinfachtem Aufbau eine qualitativ verbesserte Auswertung ermöglicht.

Diese Aufgabe wird entsprechend den Merkmalen des Anspruchs 1 gelöst. Hierdurch wird ein mehrkanaliger Hochfrequenz-Empfänger geschaffen, bei dem bereits in einem hochfrequenten analogen Abschnitt ein Signalteiler zum Aufteilen eines hochfrequenten analogen elektrischen Signals von einer Empfangseinrichtung wie etwa einer Radarantenne oder einem Meßgerätekopf in hochfrequenten analogen Kanälen zuführbare Teilsignale vorgesehen ist, denen Kanäle eines niederfrequenteren Abschnitts des Hochfrequenz-Empfängers jeweils nachgeschaltet sind, die jeweils eine Auswerteschaltung zum Erfassen von Phase und Amplitude des jeweiligen Teilsignals aufweisen.

Im einfachsten Fall sind alle dem Signalteiler folgenden Abschnitte gleich aufgebaut. Hierdurch ist eine weitere Kostenreduktion erreichbar.

Die Aufteilung des Signals bereits im Hochfrequenzbereich auf ausschließlich der Signalverarbeitung und -auswertung dienende Kanäle ermöglicht eine optimale Nutzung der zur Verfügung stehenden Signalstärke sowie eine optimale und kompromißlose Auslegung aller signalverarbeitenden und insbesondere signalauswertenden Komponenten des Empfängers entsprechend den in den jeweiligen Kanälen auszuwertenden Signalstärken. Rauschen, Signalverzerrungen und andere Signalverfälschungen werden so minimiert.

Es kann vorgesehen sein, daß die Aufteilung des Signals in Teilsignale bereits vor der ersten Verstärkung erfolgt. Hierdurch ergibt sich eine weitere Verbesserung der Auswertung.

Es kann vorgesehen sein, daß dem Signalteiler ein Signalbegrenzer nachgeschaltet ist. Hierdurch sind Signale, die für einen Kanal oder mehrere Kanäle zu stark sind, sperrbar oder begrenzbar. Vorzugsweise werden auf einem Kanal nur Signale zur Verarbeitung durchgelassen, die die Komponenten des Kanals nicht übersteuern. Neben dem Schutz der Kanäle vor Überspannungsschäden ist es durch die Verwendung eines Signalbegrenzers auch möglich, während einer Blindzeit auf einem Kanal Signale auf anderen Kanälen zu erfassen. Die Blindzeit ist die Zeit, die ein gasentladungsbasierter Signalbegrenzer benötigt, um Gasentladungsstrecken zu löschen, und üblicherweise länger als ein Sendeimpuls einer Radarvorrichtung. Bei Hochfrequenz-Empfängern mit einem eingangsseitigen, den gesamten Hochfrequenz-Empfänger blockierenden Signalbegrenzer auftretende sogenannte Blind Spots oder Blind Rings sind somit vermeidbar.

Es kann vorgesehen sein, mehrere Signalteiler kaskadenartig hintereinanderzuschalten, um den Dynamikbereich nahezu beliebig zu skalieren.

Es kann vorgesehen sein, dem Signalteiler einen Signalbegrenzer und dem Signalbegrenzer einen weiteren Signalteiler nachzuschalten. Hierdurch kann ein einzelner Signalteiler mehrere Kanäle schützen.

Es kann vorgesehen sein, im niederfrequenteren Abschnitt in jedem Kanal einen Frequenzumsetzer zum Umsetzen des jeweiligen hochfrequenten Teilsignals in ein Teilsignal mit einer Zwischenfrequenz vorzusehen. Die Verarbeitung der Teilsignale auf Zwischenfrequenzebene ist mit einfachen Mitteln und hoher Qualität möglich.

Es kann vorgesehen sein, daß die Auswerteschaltungen an die jeweilige Signalstärke anpaßbar sind, wobei die Anpassung insbesondere durch Auswahl und Dimensionierung der verwendeten Komponenten erfolgt. Die Anpassung geschieht dann durch das Aufteilungsverhältnis des Signals oder durch fest eingestellte unterschiedliche Verstärkungen der Kanäle oder beides.

Es kann vorgesehen sein, daß die Auswerteschaltungen jeweils einen Digital/Analog-Wandler zur Digitalisierung des jeweiligen Teilsignals umfassen. Dadurch ist eine für jeden Kanal unabhängige digitale Weiterverarbeitung möglich, insbesondere mit einem Signalprozessor oder Computer.

Es kann vorgesehen sein, daß die Auswerteschaltungen jeweils einen Demodulator umfassen. Dadurch ist eine für jeden Kanal unabhängige Verarbeitung möglich.

Der Hochfrequenz-Empfänger kann für hochfrequente elektromagnetische Wellen einschließlich des Mikrowellenbereichs, oder nur des Mikrowellenbereichs, und insbesondere für eine Radareinrichtung, beispielsweise eine Wetterradareinrichtung, ausgelegt sein.

Die Signalstärke bezeichnet hier wahlweise die maximale Amplitude oder die maximale Intensität des Signals.

Weitere Ausgestaltungen der Erfindung sind der nachfolgenden Beschreibung und den Unteransprüchen zu entnehmen.

Die Erfindung wird nachstehend anhand von in den beigefügten Figuren dargestellten Ausführungsbeispielen näher erläutert.
Fig. 1 ist ein Blockschaltbild eines Hochfrequenz-Empfängers.
Fig. 2, 3 und 4 illustrieren Teilsignale an jeweils verschiedenen Stellen im Hochfrequenz-Empfänger der Fig. 1.
Fig. 5 ist ein Blockschaltbild eines Hochfrequenz-Empfängers mit kaskadenartig hintereinandergeschalteten Signalteilern.
Fig. 6, 7 und 8 illustrieren Teilsignale an jeweils verschiedenen Stellen im Hochfrequenz-Empfänger der Fig. 5.
Fig. 9 ist ein Blockschaltbild eines weiteren Hochfrequenz-Empfängers.

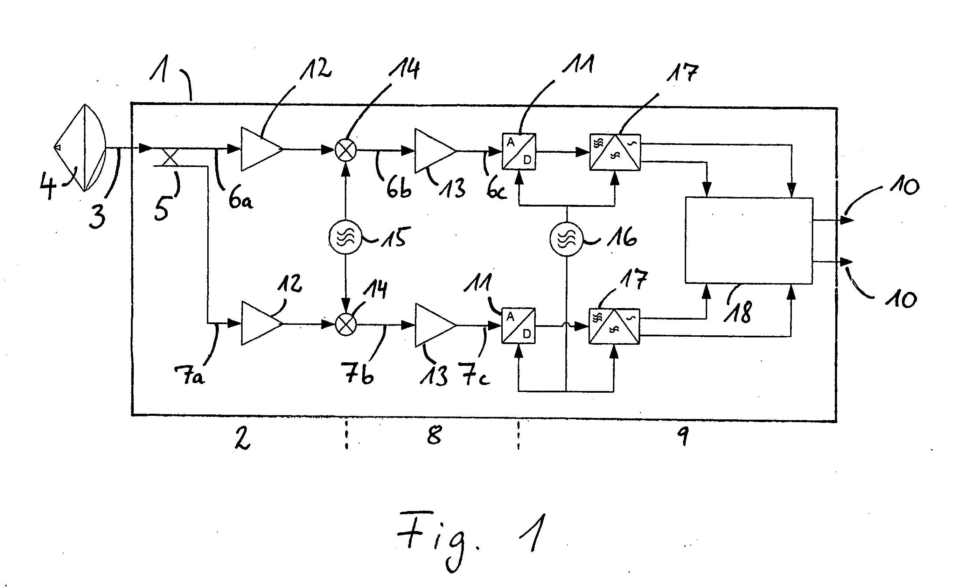

Der in Fig. 1 vereinfacht dargestellte Hochfrequenz-Empfänger 1 umfaßt einen hochfrequenten analogen Abschnitt 2 mit einem Eingang 3 für ein analoges, hochfrequentes, elektrisches Signal einer Empfangseinrichtung 4, beispielsweise in Form einer Parabolantenne für einen elektromagnetischen Radarstrahl einer Wellenlänge insbesondere im Mikrowellenbereich, mit einem Signalteiler 5 und mit zwei Kanälen 6a, 7a. Dem hochfrequenten Abschnitt 2 ist ein analoger Zwischenfrequenzabschnitt 8 mit Kanälen 6b, 7b nachgeschaltet. Dem analogen Zwischenfrequenzabschnitt 8 ist schließlich ein digitaler Basisfrequenzabschnitt 9 mit Kanälen 6c, 7c und Ausgängen 10 für dem analogen hochfrequenten elektrischen Signal entsprechende Datensignale, insbesondere Amplitude und Phase, nachgeschaltet.

Der zweckmäßigerweise passive Signalteiler 5 ist beispielsweise ein Richtkoppler und teilt das vom Eingang 3 empfangene Signal hier in zwei gegebenenfalls phasengleiche Teilsignale gleicher oder unterschiedlicher Teilsignalstärke auf, die in den Kanälen 6, 7 jeweils getrennt verarbeitet werden. Gegebenenfalls sind mehr als zwei Teilsignale und eine entsprechende Anzahl von Kanälen vorgesehen.

Der Dynamikbereich der Kanäle 6, 7 wird hier insbesondere durch den Dynamikbereich jeweiliger Digital/Analog-Wandler 11 und, sofern wie dargestellt der Signalteiler 5 vor rauscharmen Verstärkern 12 angeordnet ist, auch durch deren Dynamikbereich begrenzt. Zur Erhöhung des Dynamikbereichs im Vergleich zu einer einkanaligen Auswertung sind die Kanäle 6, 7 für jeweils unterschiedliche Signalstärken so ausgelegt, daß der Dynamikbereich des jeweiligen Digital/Analog-Wandlers 11 und gegebenenfalls rauscharmen Verstärkers 12 optimal genutzt wird. Die Auslegung der Kanäle 6, 7 auf unterschiedliche Signalstärken kann durch geeignete Wahl des Teilungsverhältnisses des Signalteilers 5 und/oder des Verstärkungsverhältnisses von in den Kanälen vorgesehenen rauscharmen Verstärkern 12, 13 erfolgen. Im folgenden wird beispielhaft angenommen, daß auf Kanal 6 geringe und auf Kanal 7 hohe Signalstärken verarbeitet werden sollen.

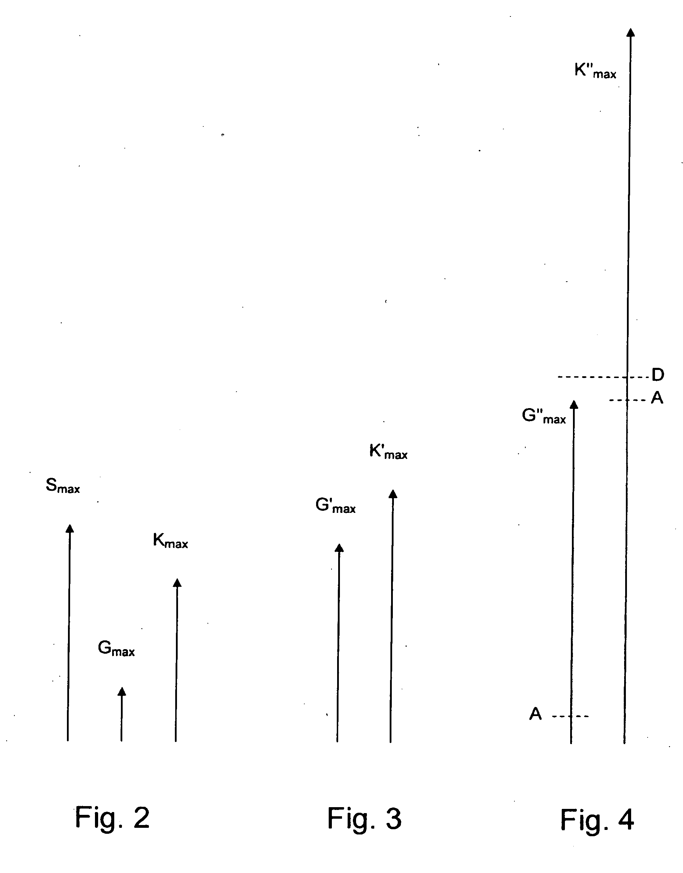

Das durch die Ausgestaltung des Signalteilers 5 vorgebbare und gegebenenfalls zusätzlich einstellbare Teilungsverhältnis beträgt beispielsweise 3:1, d.h. die Stärke des Teilsignals im Kanal 6a beträgt das dreifache der Stärke des Teilsignals im Kanal 7a und drei Viertel der Stärke des ungeteilten Signals, während die Stärke des Teilsignals im Kanal 7a ein Drittel der Stärke des Teilsignals im Kanal 6a und ein Viertel der Stärke des ungeteilten Signals beträgt. Die maximale Teilsignalstärke Kₘₐₓ und Gₘₐₓ der Teilsignale auf den Kanälen 6a bzw. 7a für eine maximal zulässige Signalstärke Sₘₐₓ am Eingang 3 ist in Fig. 2 illustriert. Andere Teilungsverhältnisse, insbesondere 1:1, sind ebenfalls möglich und können mit weiteren Verstärkungsverhältnissen kombiniert werden, wobei bei einem Teilungsverhältnis von 1:1 die Verstärkungsverhältnisse zweckmäßigerweise unterschiedlich sind.

Die dem Signalteiler 5 in den Kanälen 6a, 7a im hochfrequenten Abschnitt jeweils nachgeschalteten rauscharmen Verstärker 12, sogenannte LNA (low noise amplifier), weisen hier unterschiedliche Verstärkungsfaktoren auf. Der Verstärker 12 im Kanal 7a für hohe Signalstärken muß weniger stark verstärken als der Verstärker 12 im Kanal 6a. Die maximalen Signalstärken K'ₘₐₓ und G'ₘₐₓ der verstärkten maximal auftretenden Teilsignale sind in Fig. 3 illustriert, wobei die Größenverhältnisse zu Fig. 2 verzerrt sind, denn die Verstärkung beträgt zweckmäßigerweise mehrere Größenordnungen. Anstelle der Verstärker 12 oder zusätzlich zu diesen kann ein rauscharmer Verstärker vor dem Signalteiler 5 vorgesehen sein. Besonders vorteilhaft ist jedoch die Verwendung gleicher Verstärkungsfaktoren in den Kanälen, um die Kanäle kostengünstig mit der gleichen Schaltung aufbauen zu können, wobei dann der Signalteiler für eine zweckmäßige Aufteilung der Signalstärken auf die Kanäle zuständig ist.

Am Übergang von den Kanälen 6a, 7a des hochfrequenten Abschnitts 2 zu nachgeschalteten Kanälen 6b, 7b des Zwischenfrequenzabschnitts 8 ist jeweils ein Mischer 14 vorgesehen, der die hochfrequenten Teilsignale entsprechend der Frequenz eines Oszillators 15 auf eine Zwischenfrequenz umsetzt. Die in die Zwischenfrequenz umgesetzten Teilsignale werden durch weitere rauscharme Verstärker 13 verstärkt, deren Verstärkungsverhältnisse unterschiedlich sein können. Die maximalen Signalstärken K"ₘₐₓ und G"ₘₐₓ der durch die Verstärker 13 verstärkten Teilsignale sind in Fig. 4 illustriert, wobei die Größenverhältnisse zu Fig. 3 verzerrt sind, denn die Verstärkung beträgt zweckmäßigerweise mehrere Größenordnungen.

Am Übergang von den Kanälen 6b, 7b des Zwischenfrequenzabschnitts 8 zu nachgeschalteten Kanälen 6c, 7c des Basisfrequenzabschnitts 9 digitalisieren die von einem Oszillator 16 getakteten Analog/Digital-Wandler 11 die jeweiligen Teilsignale und leiten digitale Daten an Demodulatoren 17 weiter, die ebenfalls mit den Oszillatoren 16 verbunden sind. Zweckmäßigerweise sind das Teilungsverhältnis des Signalteilers 5 und/oder der Verstärkungsfaktor wenigestens eines Verstärkers 12, 13 so ausgelegt, daß die maximale Teilsignalstärke G"ₘₐₓ auf dem Kanal 7 für starke Signale den Dynamikbereich D der Analog/Digital-Wandler 11 optimal ausnutzt, während die maximale Teilsignalstärke K"ₘₐₓ auf dem Kanal 6 für schwache Signale den Dynamikbereich D deutlich überschreitet, vgl. Fig. 4. Die Auslegung erfolgt zweckmäßigerweise so, daß ein Teilsignal auf dem Kanal 7 für starke Signale mit einer Teilsignalstärke unterhalb eines Schwellenwerts A, bei dem eine vorgegebene Auflösung noch erzielbar ist, vollständig auf dem Kanal 6 für schwache Signale verarbeit- und insbesondere digitalisierbar ist, vgl. Fig. 4.

Die Verstärker 12, 13 können hierzu linear oder insbesondere derart nichtlinear, z.B. logarithmisch, verstärken, daß der Bereich oberhalb des Schwellenwerts A im Kanal 7 und der Bereich unterhalb des Schwellenwerts A im Kanal 6 stärker verstärkt wird, als der jeweils andere Bereich, um den jeweils interessierenden Bereich für eine genauere Digitalisierung zu strecken.

Die Demodulatoren 17 bestimmten die Amplitude und Phase des jeweiligen Teilsignals. Hierzu können bekannte I/Q-Demodulatoren verwendet werden. Zweckmäßigerweise werden die Demodulatoren 17 durch einen digitalen Signalprozessor oder ein Computerprogramm eines den Analog/Digitalwandlern 11 nachgeschalteten Computers implementiert. Der Computer kann auch ein Microcontroller, ein ASIC z.B. in Form eines FPGA oder EPLD usw. oder ein digitaler Signalprozessor od.dgl. sein, wobei die die Software als Firmware implementiert sein kann.

Den Demodulatoren 17 nachgeschaltet ist eine Auswahleinrichtung 18, der eingangsseitig die digitalen Werten für z.B. Amplitude und Phase der Teilsignale in den Kanälen 6c, 7c zugeführt werden und die an den Ausgängen 10 Ausgangssignale bereitstellt. Im einfachsten Fall wählt die Auswahleinrichtung 18 das Teilsignal zur Ausgabe an den Ausgängen 10 aus, das den Dynamikbereich am besten ausnutzt, also dessen Signalstärke am nächsten an den Dynamikbereich D herankommt, ohne diesen zu überschreiten. Ferner kann vorgesehen sein, daß die Auswahleinrichtung 18 diejenigen Kanäle identifiziert, die gesättigt sind. Zudem kann eine Messung der Phasen- und/oder Amplitudendifferenzen zwischen den Kanälen 6c, 7c insbesondere während eines Meß- und/oder Kalibrierungszeitraums durchgeführt werden, um im nachfolgenden Betrieb die Meßwerte auf Basis der Differenzen zu korrigieren. Die Auswahleinrichtung 18 ist zweckmäßigerweise zusammen mit den Demodulatoren 17 als Computerprogramm implementiert.

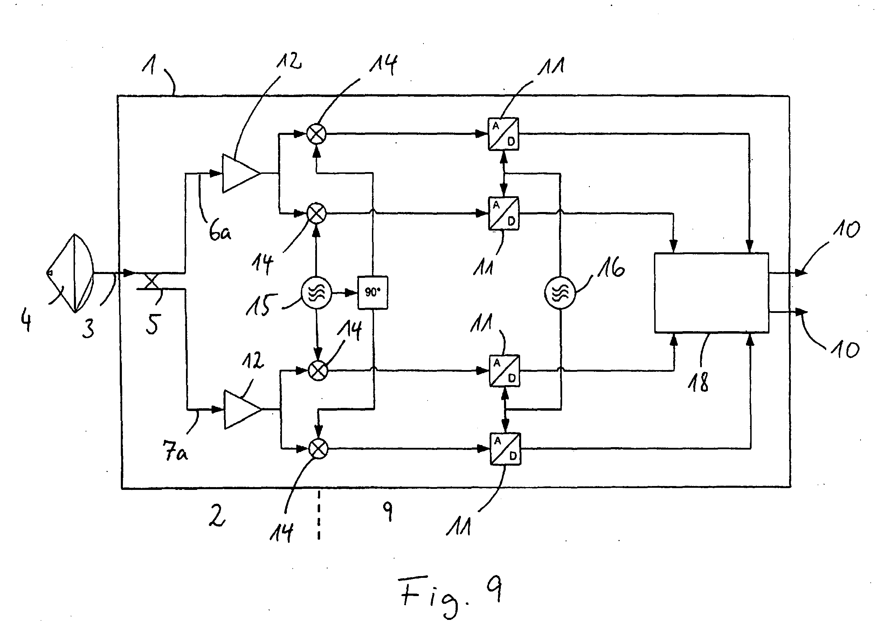

Dem hochfrequenten Abschnitt 2 kann sich anstelle des in Fig. 1 dargestellten Zwischenfrequenzabschnitts 5 auch ein anderer niederfrequenterer Abschnitt anschließen. Insbesondere kann der niederfrequentere Abschnitt mehrere hintereinander geschaltete Zwischenfrequenzabschnitte, keinen Zwischen- sondern nur einen Basisfrequenzabschnitt (Zero-IF Receiver, vgl. Fig. 9) oder einen Abschnitt mit Analog/Digital-Wandlern auf Zwischen- oder Basisfrequenz aufweisen. Zudem können anstelle der Analog/Digital-Wandler analoge I/Q-Demodulatoren vorgesehen sein, auf deren Dynamikbereich die Komponenten in den Kanälen ausgelegt sind.

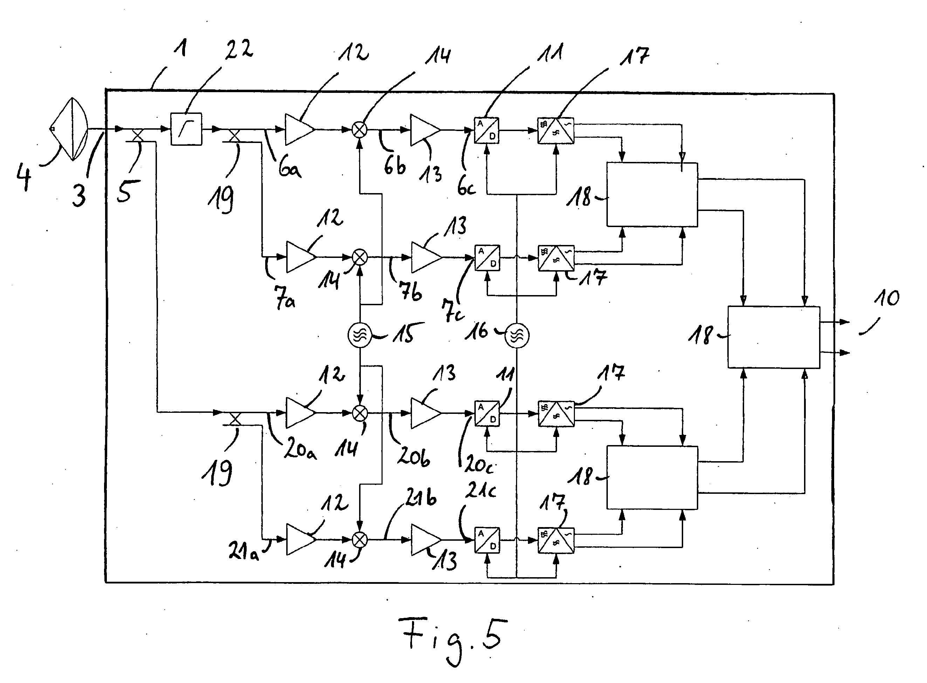

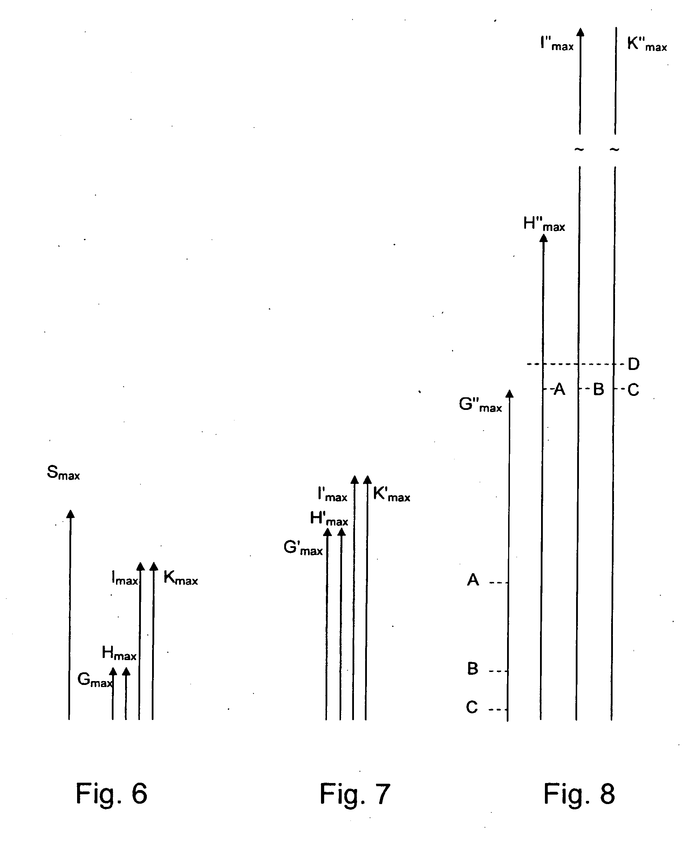

Bei dem in Fig. 5 dargestellten Hochfrequenz-Empfänger sind dem Signalteiler 5 Signalteiler 19 kaskadenartig nachgeschaltet, um das Signal auf vier Kanäle 6, 7, 20, 21 für abgestufte Signalstärken aufzuteilen. Kanal 6 ist für die niedrigste Signalstärke vorgesehen, während Kanal 21 für die höchste Signalstärke vorgesehen ist. Die den Kanälen 21, 20, 7, 6 entsprechenden maximalen Teilsignalstärken Gₘₐₓ, Hₘₐₓ, Iₘₐₓ, Kₘₐₓ nach Teilung, G'ₘₐₓ, H'ₘₐₓ, I'ₘₐₓ, K'ₘₐₓ nach Verstärkung durch die Verstärker 12 und G"ₘₐₓ, H"ₘₐₓ, I"ₘₐₓ, K"ₘₐₓ nach Verstärkung durch die Verstärker 13 sind in Fig. 6 bis 8 dargestellt, die den Fig. 2 bis 4 entsprechen. Hier beträgt das Teilungsverhältnis der Signalteiler 19 1:1, so daß die Teilsignalstärken Gₘₐₓ. Hₘₐₓ, und Iₘₐₓ, Kₘₐₓ jeweils gleich groß sind. Die Auslegung der Komponenten erfolgt derart, daß ein Signal am Eingang 3, das zu einem verstärkten Teilsignal mit einer Signalstärke beim in Fig. 8 illustrierten Schwellenwert A, B oder C führt, in den Kanälen 20, 7 bzw. 6 eine Teilsignalstärke gerade unterhalb des Dynamikbereichs D des jeweiligen Analog/Digital-Wandlers 11 aufweist.

Ferner ist in Fig. 5 beispielhaft für Kanäle 6, 7 ein Signalbegrenzer 22 vorgesehen. Der Signalbegrenzer 22 verhindert, daß ein Signal mit einer Stärke, die über der größten maximal zulässigen Stärke für die nachfolgenden Kanäle liegt, hier also oberhalb der maximal zulässigen Stärke für Kanal 7, durchgelassen wird, während Signale mit einer Stärke, die auf Kanal 6 oder Kanal 7 verarbeitbar ist, durchgelassen werden. Signalbegrenzer können auch individuell für einzelne Kanäle, zweckmäßigerweise jeweils vor dem ersten Verstärker im jeweiligen Kanal, vorgesehen sein. Eine Beschädigung von Komponenten infolge Übersteuerung oder Spannungsspitzen kann somit wirksam verhindert werden, da nur Signale durchgelassen werden, die auf dem nachgeschalteten Kanal oder den nachgeschalteten Kanälen verarbeitbar sind. Beispielsweise werden durch den Signalbegrenzer 22 nur Teilsignale mit einer Stärke durchgelassen, die nach Verstärkung innerhalb des Dynamikbereichs D des Kanals 7 liegen. Während der Signalbegrenzer 22 wirksam ist, ist zudem eine Signalerfassung auf den weiteren Kanälen, die für größere Signalstärken.ausgelegt sind und keine oder keine zur selben Zeit ein Teilsignal begrenzenden Signalbegrenzer aufweisen, möglich.

Die in Fig. 9 dargestellte Ausführungsform eines Hochfrequenz-Empfängers 1 in Form eines sogenannten Zero-IF-Receivers umfaßt einen hochfrequenten Abschnitt 2, an den sich unmittelbar über Mischer 14 ein niederfrequenterer Abschnitt, z.B. ein Basisfrequenzabschnitt 9, mit A/D-Wandlern 11 anschließt. Hier wird ohne Zwischenfrequenzabschnitt quasi direkt aus dem Hochfrequenzabschnitt 2 demoduliert. Dazu sind hier in jedem Kanal zwei Mischer 14 vorgesehen, die um 90° verschoben vom Oszillator 15 gespeist werden und zusammen mit den A/D-Wandlern 11, die ebenfalls pro Kanal doppelt vorhanden sind, die Demodulation durchführen, um hier Eingängen der Auswahlvorrichtung pro Kanal I/Q-Daten wie beim Demodulator 17 der Fig. 1 getrennt zuzuführen.

## Patentansprüche

1. Mehrkanaliger Hochfrequenz-Empfänger (1) mit
einem hochfrequenten analogen Abschnitt (2), der einen Eingang (3) für ein elektrisches Signal einer Empfangseinrichtung (4) aufweist, und
einem dem hochfrequenten analogen Abschnitt (2) nachgeschalteten niederfrequenteren Abschnitt (8, 9), der mehrere parallele Kanäle (6b, 6c; 7b, 7c) für jeweils unterschiedliche Signalstärken und eine Auswerteschaltung aufweist,
**dadurch gekennzeichnet, daß**
im hochfrequenten analogen Abschnitt (2) ein Signalteiler (5) zum Aufteilen des Signals einer Frequenz gemäß einem vorgebbaren Teilungsverhältnis in hochfrequenten analogen Kanälen (6a, 7a) zuführbare Teilsignale vorgesehen ist, denen die Kanäle (6b, 6c; 7b, 7c) des niederfrequenteren Abschnitts (8, 9) jeweils nachgeschaltet sind, und
die Kanäle (6b, 6c; 7b, 7c) des niederfrequenteren Abschnitts (8, 9) jeweils eine Auswerteschaltung zum Erfassen von Phase und Amplitude des jeweiligen Teilsignals einer Frequenz aufweisen, wobei
die Auswerteschaltungen für eine Messung der Phasen- und/oder Amplitudendifferenz zwischen den Kanälen (6b, 6c; 7b, 7c) des niederfrequenteren Abschnitts (8, 9) ausgestaltet sind, um die erfassten Messwerte von Phase und Amplitude des jeweiligen Teilsignals auf Basis der ermittelten Phasen- und/oder Amplitudendifferenz zu korrigieren.

2. Empfänger nach Anspruch 1, **dadurch gekennzeichnet, daß** ein erster Verstärker (12) im Signalweg des Signals vom Eingang (3) zu einem Ausgang (10) des Empfängers (1) dem Signalteiler (5) nachgeschaltet ist.

3. Empfänger nach Anspruch 1 oder 2, **dadurch gekennzeichnet, daß** dem Signalteiler (5) ein Signalbegrenzer (22) nachgeschaltet ist.

4. Empfänger nach einem der Ansprüche 1 bis 3, **dadurch gekennzeichnet, daß** mehrere Signalteiler (5, 19) kaskadenartig hintereinandergeschaltet sind.

5. Empfänger nach einem der Ansprüche 1 bis 4, **dadurch gekennzeichnet, daß** dem Signalteiler (5) ein Signalbegrenzer (22) und dem Signalbegrenzer (22) ein weiterer Signalteiler (19) nachgeschaltet sind.

6. Empfänger nach einem der Ansprüche 1 bis 5, **dadurch gekennzeichnet, daß** der niederfrequentere Abschnitt (8, 9) in jedem Kanal (6b, 6c; 7b, 7c) einen Frequenzumsetzer (14) zum Umsetzen des jeweiligen hochfrequenten Teilsignals in ein Teilsignal mit einer Zwischenfrequenz umfaßt.

7. Empfänger nach einem der Ansprüche 1 bis 6, **dadurch gekennzeichnet, daß** die Auswerteschaltungen an die jeweiligen Signalstärken anpaßbar sind.

8. Empfänger nach einem der Ansprüche 1 bis 7, **dadurch gekennzeichnet, daß** die Auswerteschaltungen jeweils einen Digital/Analog-Wandler (11) zur Digitalisierung des jeweiligen Teilsignals umfassen.

9. Empfänger nach einem der Ansprüche 1 bis 8, **dadurch gekennzeichnet, daß** die Auswerteschaltungen jeweils einen Demodulator (17) umfassen.

10. Empfänger nach einem der Ansprüche 1 bis 9, **dadurch gekennzeichnet, daß** die Empfangseinrichung (4) eine Mikrowellen-Empfangseinrichtung ist.

11. Empfänger nach einem der Ansprüche 1 bis 10, **dadurch gekennzeichnet, daß** der Empfänger (1) ein Empfänger für eine Radareinrichtung ist.

## Claims

1. Multichannel high-frequency receiver (1) having
a high-frequency analog stage (2), which has an input (3) for an electrical signal of a reception device (4), and
a lower-frequency stage (8, 9) which is arranged downstream of the high-frequency analog stage (2) and has a plurality of parallel channels (6b, 6c; 7b, 7c), each for different strengths of signal, and an evaluating circuit,
**characterized in that**
in the high-frequency analog stage (2) there is provided a signal splitter (5) for splitting, in accordance with a pre-settable division ratio, the signal of one frequency into sub-signals which are suppliable in high-frequency analog channels (6a, 7a), downstream of which there are respectively arranged the channels (6b, 6c; 7b, 7c) of the lower-frequency stage (8, 9), and
the channels (6b, 6c; 7b, 7c) of the lower-frequency stage (8, 9) each have an evaluating circuit for determining phase and amplitude of the respective sub-signal of a frequency,
the evaluating circuits being configured for measuring the phase and/or amplitude difference between the channels (6b, 6c; 7b, 7c) of the lower-frequency stage (8, 9) in order to correct the determined measured values of the phase and amplitude of the respective sub-signal on the basis of the phase and/or amplitude difference ascertained.

2. Receiver according to claim 1, **characterized in that** a first amplifier (12) is arranged downstream of the signal splitter (5) in the signal path of the signal from the input (3) to an output (10) of the receiver (1).

3. Receiver according to claim 1 or 2, **characterized in that** a signal limiter (22) is arranged downstream of the signal splitter (5).

4. Receiver according to any one of claims 1 to 3, **characterized in that** a plurality of signal splitters (5, 19) are arranged in series cascade-like.

5. Receiver according to any one of claims 1 to 4, **characterized in that** a signal limiter (22) is arranged downstream of the signal splitter (5) and a further signal splitter (19) is arranged downstream of the signal limiter (22).

6. Receiver according to any one of claims 1 to 5, **characterized in that** the lower-frequency stage (8, 9) in each channel (6b, 6c; 7b, 7c) comprises a frequency converter (14) for converting the respective high-frequency sub-signal into a sub-signal having an intermediate frequency.

7. Receiver according to any one of claims 1 to 6, **characterized in that** the evaluating circuits are matchable to the respective signal strengths.

8. Receiver according to any one of claims 1 to 7, **characterized in that** the evaluating circuits each comprise a digital/analog transformation means (11) for digitizing the respective sub-signal.

9. Receiver according to any one of claims 1 to 8, **characterized in that** the evaluating circuits each comprise a demodulator (17).

10. Receiver according to any one of claims 1 to 9, **characterized in that** the reception device (4) is a microwave reception device.

11. Receiver according to any one of claims 1 to 10, **characterized in that** the receiver (1) is a receiver for a radar device.

## Revendications

1. Récepteur (1) à haute fréquence et plusieurs canaux, présentant
une partie analogique (2) à haute fréquence qui présente une entrée (3) pour un signal électrique d'un dispositif de réception (4),
une partie (8, 9) à plus basse fréquence, raccordée en aval de la partie analogique (2) à haute fréquence et présentant plusieurs canaux parallèles (6b, 6c; 7b, 7c), chacun pour une intensité différente du signal, et
un circuit d'évaluation,
**caractérisé en ce que**
il présente dans la partie analogique (2) à haute fréquence un diviseur (5) de signaux qui divise selon un rapport de division prédéterminé le signal d'une fréquence en signaux partiels qui peuvent être amenés à des canaux analogiques (6a, 7a) à haute fréquence raccordés en aval des canaux (6b, 6c; 7b, 7c) de la partie (8, 9) à plus basse fréquence,
**en ce que** les canaux (6b, 6c; 7b, 7c) de la partie (8, 9) à plus basse fréquence présentent tous un circuit d'évaluation qui détecte phase et amplitude de chaque signal partiel à une fréquence et
**en ce que** les circuits d'évaluation sont configurés pour mesurer la différence de phase et/ou la différence d'amplitude entre les canaux (6b, 6c; 7b, 7c) de la partie (8, 9) à plus basse fréquence pour corriger les valeurs de mesure ainsi obtenues de la phase et de l'amplitude de chaque signal partiel en fonction de la différence de phase et/ou de la différence d'amplitude qui ont été déterminées.

2. Récepteur selon la revendication 1, **caractérisé en ce qu'**un premier amplificateur (12) est raccordé en aval du diviseur (5) de signaux dans le parcours du signal qui relie l'entrée (3) à une sortie (10) du récepteur (1).

3. Récepteur selon la revendication 1 ou 2, **caractérisé en ce qu'**un limiteur de signaux (22) est raccordé en aval du diviseur (5) de signaux.

4. Récepteur selon l'une des revendications 1 à 3, **caractérisé en ce que** plusieurs diviseurs (5, 19) de signaux sont raccordés les uns derrière les autres en cascade.

5. Récepteur selon l'une des revendications 1 à 4, **caractérisé en ce qu'**un limiteur (22) de signaux est raccordé en aval du diviseur (5) de signaux et un autre diviseur (19) de signaux est raccordé en aval du limiteur (22) de signaux.

6. Récepteur selon l'une des revendications 1 à 5, **caractérisé en ce que** la partie (8, 9) à plus basse fréquence comprend dans chaque canal (6b, 6c; 7b, 7c) un convertisseur de fréquence (14) qui convertit le signal partiel à haute fréquence en un signal partiel d'une fréquence intermédiaire.

7. Récepteur selon l'une des revendications 1 à 6, **caractérisé en ce que** les circuits d'évaluation peuvent être adaptés à l'intensité de chaque signal.

8. Récepteur selon l'une des revendications 1 à 7, **caractérisé en ce que** les circuits d'évaluation comprennent chacun un convertisseur numérique-analogique (11) qui numérise chaque signal partiel.

9. Récepteur selon l'une des revendications 1 à 8, **caractérisé en ce que** les circuits d'évaluation comprennent tous un démodulateur (17).

10. Récepteur selon l'une des revendications 1 à 9, **caractérisé en ce que** le dispositif de réception (4) est un dispositif de réception de micro-ondes.

11. Récepteur selon l'une des revendications 1 à 10, **caractérisé en ce que** le récepteur (1) est un récepteur pour dispositif radar.
